# EUROPÄISCHE PATENTANMELDUNG

(11) **EP 4 063 303 A1**
(43) Veröffentlichungstag der Anmeldung: **28.09.2022**
(21) Anmeldenummer: 21164090.9
(22) Anmeldetag: 22.03.2021
(51) Int. Cl.: B65G 47/08, B65B 35/44, B65G 47/29, B65G 47/30, B65G 47/88

(54) **VERFAHREN UND VORRICHTUNG ZUM GRUPPIEREN UND/ODER SEPARIEREN VON IM REIHENTRANSPORT BEFÖRDERTEN PRODUKTEN**

(71) Anmelder: Illinois Tool Works, Inc., Glenview, Illinois 60025 (US)
(72) Erfinder: WÖHLE, Linus, 48480 Schapen (DE); VAN DÜLMEN, 48480 Lünne (DE)
(74) Vertreter: Trinks, Ole

(57) **Zusammenfassung**

Die Erfindung betrifft ein Verfahren zum Gruppieren und/oder Separieren von im Reihentransport beförderten Produkten (2). Mit Hilfe eines ersten Förderbands (1) werden die zu gruppierenden bzw. zu separierenden Produkte (2) so lange auf ein in Reihe mit dem ersten Förderband (1) geschaltetes zweites Förderband (3) befördert, bis ein stromabwärtiges Produkt der zu gruppierenden bzw. zu separierenden Produkte (2) an einen Einteilsteg (4) einer dem zweiten Förderband (3) zugeordneten Einteileinrichtung (5) anläuft. Nach oder beim Anlaufen des stromabwärtigen Produkts an den Einteilsteg (4) wird eine mit Hilfe des ersten Förderbands (1) bewirkte Beförderung von Produkten (2) in den stromaufwärtigen Bereich des zweiten Förderbands (3) unterbrochen. Dabei wird das zweite Förderband (3) kontinuierlich in eine von dem zweiten Förderband (3) vorgegebene Transportrichtung (7) angetrieben, und der Einteilsteg (4) läuft vorzugsweise über eine definierte Strecke mit dem zweiten Förderband (3) in dessen Transportrichtung (7) mit und wird vorzugsweise dann aus dem Produktstrom des zweiten Förderbands (3) herausgenommen.

## Beschreibung

Die vorliegende Erfindung betrifft ein Verfahren sowie eine Vorrichtung zum Gruppieren und/oder Separieren von im Reihentransport beförderten Produkten.

Bei den hierin berücksichtigten Produkten handelt es sich beispielsweise um Stückgüter, Artikel oder Gebinde.

Insbesondere in Produktionsanlagen der Massengüterherstellung ist häufig ein kontinuierlicher Produktzulauf notwendig. Häufig befinden sich die einzelnen Produkte beim Transport zwischen den Behandlungsmaschinen in einem mehr oder weniger geschlossenen Produktstrom.

Allerdings kann es ab einem bestimmten Zeitpunkt bzw. je nach vorhandener Kapazität und gegebenem Aufbau der Behandlungsmaschine notwendig sein, die im Reihentransport beförderten Produkte in unterschiedlich große Teilgruppen einzuteilen, insbesondere auch hinsichtlich einer nachfolgenden Lagenbildung und/oder Palettierung bzw. Folienummantelung der Produkte.

Verfahren und Vorrichtungen zum Aufteilen von hintereinander in einer Reihe beförderten Produkten sind zumindest dem Prinzip nach allgemein aus dem Stand der Technik bekannt. In diesem Zusammenhang sei beispielsweise auf die Druckschrift DE 10 2012 111 920 A1 hingewiesen.

Mit einer solchen Einrichtung werden Produkte, wie zum Beispiel mit Saft befüllte Getränkekartons, die beispielsweise von der Abfüllanlage kommend hintereinander in einer Reihe gefördert werden, quer zu ihrer Förderrichtung verschoben, um sie anschließend zu gruppieren und die gruppierten Produkte in einer Verpackungsmaschine zu Gebinden zu verpacken. Dabei können diese in Verpackungskartons in einer Gruppe zu beispielsweise vier oder sechs Produkten eingesetzt oder zu einem Gebinde in Folie eingeschrumpft werden.

Die hintereinander in einer einzigen Reihe angeförderten Produkte müssen ggf. separiert, auf jeden Fall aber in kontrollierter Weise quer zur Förderrichtung verschoben werden, um sie auf mehrere nachgeordnete und parallel zueinander geförderten Reihen zu verteilen. Die Anzahl von Produkten in einem Gebinde ist an sich natürlich beliebig groß.

Bei der beispielsweise aus der Druckschrift DE 10 2012 111 920 A1 bekannten Einrichtung zur Umgruppierung oder Umsortierung einer Anzahl von in wenigstens einer Reihe hintereinander beförderten Produkten in eine Anordnung mit quer zur Förderrichtung nebeneinander befindlichen Produkten ist ein quer zur Förderrichtung beweglicher abgestufter Schieber vorgesehen, der bei einem Schubvorgang quer zur Förderrichtung die aufeinander folgenden und umzugruppierenden oder umzusortierenden Produkte nacheinander jeweils um einen unterschiedlichen Verschiebeweg quer zur Förderrichtung verschiebt. Der Schieber weist eine treppenartige bzw. gestufte Kontur mit Anlageflächen auf, die in Förderrichtung aufeinanderfolgende Produkte jeweils um einen Betrag quer zu Förderrichtung verschieben, der mindestens der Produktbreite bzw. dem Produktdurchmesser entspricht. Nach Ausbildung der Stufenformation werden die Produkte anschließend verzögert oder beschleunigt und aus der Verzögerung oder Beschleunigung resultieren dann mehrere Gruppen von wenigstens zwei Produkten einer Anordnung nebeneinander und quer zur Förderrichtung.

Bei der kontinuierlichen horizontalen Förderung von Produkten mittels Bandförderern oder dergleichen werden die Produkte in einer ununterbrochenen Reihe oder in mehreren parallelen ununterbrochenen Reihen zu aufeinander folgenden Behandlungs- und/oder Handhabungsstationen gefördert. Sollen die Produkte ab einem bestimmten Zeitpunkt gruppenweise bearbeitet werden, beispielsweise um eine Gebindegruppe zusammenzustellen, so ist eine Abtrennung der gewünschten Anzahl von Produkten aus dem ununterbrochenen und meist weitgehend lückenlosen Produktstrom erforderlich.

Bekannte Gruppierungselemente sehen beispielsweise so genannte Einteilfinger vor, die von unten, oben oder aus seitlicher Richtung in den Förderstrom eintauchen und durch Zurückhalten oder Beschleunigen einer definierten Anzahl von Produkten gegenüber einem sich schneller bewegenden Förderband oder ggf. auch durch Beschleunigen gegenüber einem sich langsamer bewegenden Förderband für die Herstellung einer definierten Lücke zwischen den gruppierten Produkten sorgen können.

Derartige Gruppierungsverfahren werden beispielsweise bei der Förderung von Getränkebehältern eingesetzt.

Beispielsweise offenbart die Druckschrift GB 2 316 926 B eine Zuführvorrichtung für eine Verpackungsmaschine, wobei eine Einlaufvorrichtung einen oder mehrere Produkte aus einem definierten Vorrat beschleunigt. Der Vorrat bewegt sich über eine Übergabeplatte, und das eine Produkt oder die mehreren Produkte wird/werden von unten mit einem angetriebenen Band angehoben, wobei sich die Produkte mit der gleichen Geschwindigkeit wie das angetriebene Band bewegen. Im Betrieb gleiten die Produkte entlang der Übergabeplatte und berühren das laufende Band nicht. Sobald sich die erste Gruppe von Produkten über einem Führungselement befindet, bewegen sich Nocken, um das Führungselement anzuheben. Die angehobenen Produkte werden dann aus dem nachfolgenden Produktstrom heraus beschleunigt.

Aufgabe der vorliegenden Erfindung ist es, ein Verfahren sowie eine Vorrichtung zum Gruppieren und/oder Separieren von im Reihentransport beförderten Produkten anzugeben, wobei in einer leicht zu realisierenden aber dennoch effektiven Weise variabel ein Abstand zwischen aus dem Produktstrom eingeteilten Teilgruppen variabel und stufenlos einstellbar ist.

Insbesondere soll ein Prinzip zur Produktseparierung mit stufenlos einstellbarer Rapportlänge angegeben werden.

Die mit Hilfe des erfindungsgemäßen Verfahrens bzw. mit Hilfe der erfindungsgemäßen Vorrichtung erstellten Produktgruppen werden vorzugsweise anschließend mit einer stufenlos verstellbaren Lücke zueinander einer Schlauchbeutelmaschine zugeführt. Dabei muss dieser Prozess ab der Produktseparierung kontinuierlich laufen.

Im Hinblick auf das Verfahren wird die der Erfindung zu Grunde liegende Aufgabe durch den Gegenstand des unabhängigen Patentanspruchs 1 gelöst, wobei vorteilhafte Weiterbildungen des erfindungsgemäßen Verfahrens in den abhängigen Patentansprüchen 2 bis 8 angegeben sind.

Im Hinblick auf die Vorrichtung wird die der Erfindung zu Grunde liegende Aufgabe durch den Gegenstand des nebengeordneten Patentanspruchs 9 gelöst, wobei vorteilhafte Weiterbildungen der erfindungsgemäßen Vorrichtung in den abhängigen Patentansprüchen 10 bis 13 angegeben sind.

Demgemäß betrifft die Erfindung insbesondere ein Verfahren zum Gruppieren und/oder Separieren von im Reihentransport beförderten Produkten, wobei das Verfahren die folgenden Verfahrensschritte aufweist:
Mit Hilfe eines ersten Förderbands werden die zu gruppierenden bzw. zu separierenden Produkte so lange auf ein in Reihe mit dem ersten Förderband geschaltetes zweites Förderband befördert, bis ein stromabwärtiges Produkt der zu gruppierenden bzw. zu separierenden Produkte an einen Einteilsteg einer dem zweiten Förderband zugeordneten Einteileinrichtung anläuft. Nach oder beim Anlaufen des stromabwärtigen Produkts an den Einteilsteg wird eine mit Hilfe des ersten Förderbands bewirkte Beförderung von Produkten in den stromaufwärtigen Bereich des zweiten Förderbands unterbrochen.

Erfindungsgemäß ist in diesem Zusammenhang insbesondere vorgesehen, dass das zweite Förderband kontinuierlich in eine von dem zweiten Förderband vorgegebene Transportrichtung angetrieben wird. Insbesondere ist in diesem Zusammenhang vorgesehen, dass der Einteilsteg vorzugsweise über eine definierte Strecke mit dem zweiten Förderband in dessen Transportrichtung mitläuft und vorzugsweise dann aus dem Produktstrom des zweiten Förderbands herausgenommen wird.

Gemäß bevorzugten Realisierungen des erfindungsgemäßen Verfahrens ist vorgesehen, dass nach dem Herausnehmen des Einteilstegs aus dem Produktstrom des zweiten Förderbands dieser entgegen der Transportrichtung des zweiten Förderbands wieder zurück in einen stromaufwärtigen Bereich des zweiten Förderbands bewegt wird, in welchem die von dem ersten Förderband beförderten Produkte an den zurückbewegten Einteilsteg anlaufbar sind.

Insbesondere kann in diesem Zusammenhang vorgesehen sein, dass nach dem Zurückbewegen des Einteilstegs in den stromaufwärtigen Bereich des zweiten Förderbands eine mit Hilfe des ersten Förderbands bewirkte Beförderung von Produkten in den stromaufwärtigen Bereich des zweiten Förderbands wiederaufgenommen wird, so dass mit Hilfe des ersten Förderbands die zu gruppierenden bzw. zu separierenden Produkte wieder auf das zweite Förderband befördert werden, und zwar so lange, bis ein stromabwärtiges Produkt der zu gruppierenden bzw. zu separierenden Produkte an den in dem stromaufwärtigen Bereich des zweiten Förderbands zurückbewegten Einteilsteg anläuft.

Erfindungsgemäß ist die dem zweiten Förderband zugeordnete Einteilrichtung insbesondere ausgebildet, den Einteilsteg gemäß einem insbesondere vorab festgelegten oder festlegbaren Zeit- und/oder Ereignisablauf nach dessen Herausnahme aus dem Produktstrom des zweiten Förderbands wieder in einen stromaufwärtigen Bereich des zweiten Förderbands, in welchem die von dem ersten Förderband beförderten Produkte anlaufbar sind, derart zurückzubewegen, dass im Hinblick auf das zweite Förderband eine Rapportlänge insbesondere variabel und insbesondere stufenlos einstellbar ist.

Gemäß Realisierungen der Erfindung ist vorgesehen, dass die dem zweiten Förderband zugeordnete Einteileinrichtung zum Transport des Einteilstegs mindestens ein umlaufendes Endlosband aufweist, welches ausgebildet ist, den Einteilsteg in einer geschlossenen Kurve zu führen und zu transportieren, wobei beim Zurückbewegen des Einteilstegs zu dem stromaufwärtigen Bereich des zweiten Förderbands der Einteilsteg oberhalb, unterhalb oder seitlich einer Förderebene des zweiten Förderbands geführt und/oder transportiert wird.

Insbesondere kann vorgesehen sein, dass eine Geschwindigkeit, mit welcher der Einteilsteg über die definierte Strecke mit dem zweiten Förderband in dessen Transportrichtung mitläuft, vorzugsweise einstellbar und insbesondere mit der Transportgeschwindigkeit des zweiten Transportbands derart koordiniert ist, dass die Geschwindigkeit des Einteilstegs beim Mitlaufen mit dem zweiten Förderband in dessen Transportrichtung zumindest im Wesentlichen der Transportgeschwindigkeit des zweiten Transportbands entspricht.

Alternativ oder zusätzlich hierzu kann vorgesehen sein, dass eine Geschwindigkeit, mit welcher der Einteilsteg über die definierte Strecke mit dem zweiten Förderband in dessen Transportrichtung mitläuft, vorzugsweise einstellbar und insbesondere mit der Transportgeschwindigkeit des zweiten Transportbands derart koordiniert ist, dass die Geschwindigkeit des Einteilstegs bei und/oder unmittelbar vor seiner Herausnahme aus dem Produktstrom des zweiten Förderbands größer als die Transportgeschwindigkeit des zweiten Förderbands ist.

Gemäß Realisierungen der vorliegenden Erfindung ist vorgesehen, dass die dem zweiten Förderband zugeordnete Einteileinrichtung mindestens zwei von dem umlaufenden Endlosband geführte und/oder transportierte Einteilstege aufweist.

Im Hinblick auf die Vorrichtung zum Gruppieren und/oder Separieren von im Reihentransport beförderten Produkten ist erfindungsgemäß vorgesehen, dass die Vorrichtung eine Horizontalfördereinrichtung mit einem stromaufwärtigen ersten Förderband und einem in Reihe mit dem ersten Förderband geschalteten, stromabwärtigen zweiten Förderband aufweist. Darüber hinaus weist die Vorrichtung eine dem zweiten Förderband zugeordnete Einteileinrichtung mit mindestens einem Einteilsteg auf.

Erfindungsgemäß weist die Vorrichtung insbesondere eine Steuereinrichtung auf, welche ausgebildet ist, das erste Förderband insbesondere in einem Start-Stopp-Betrieb zu betreiben.

Die Einteileinrichtung, welche dem zweiten Förderband zugeordnet ist, ist insbesondere ausgebildet, den mindestens einen Einteilsteg derart vorzugsweise in einer geschlossenen Kurve zu führen, dass der mindestens eine Einteilsteg über eine definierte Strecke mit dem zweiten Förderband in dessen Transportrichtung mitläuft und dann aus dem Produktstrom des zweiten Förderbands herausgenommen und entgegen der Transportrichtung des zweiten Förderbands wieder zurück in einen stromaufwärtigen Bereich des zweiten Förderbands bewegt wird.

Dabei ist das erste Förderband ausgebildet, die zu gruppierenden bzw. zu separierenden Produkte in den stromaufwärtigen Bereich des zweiten Förderbands zu befördern. Die Steuereinrichtung ist dabei ausgebildet, eine mit Hilfe des ersten Förderbands bewirkte Beförderung von Produkten in den stromaufwärtigen Bereich des zweiten Förderbands zu unterbrechen, wenn ein stromabwärtiges Produkt der zu gruppierenden bzw. zu separierenden Produkte in dem stromaufwärtigen Bereich des zweiten Förderbands an den mindestens einen Einteilsteg anläuft.

Gemäß bevorzugten Weiterbildungen der erfindungsgemäßen Vorrichtung ist vorgesehen, dass zum Unterbrechen einer mit Hilfe des ersten Förderbands bewirkten Beförderung von Produkten in den stromaufwärtigen Bereich des zweiten Förderbands die Steuereinrichtung ausgebildet ist, eine dem ersten Förderband zugeordnete Antriebseinrichtung anzuhalten.

Alternativ oder zusätzlich hierzu ist es aber auch denkbar, dass zum Unterbrechen einer mit Hilfe des ersten Förderbands bewirkten Beförderung von Produkten in den stromaufwärtigen Bereich des zweiten Förderbands vorzugsweise am stromaufwärtigen Endbereich des ersten Förderbands eine bedarfsweise ansteuerbare Rückhalteeinrichtung insbesondere mit einem Druckelement vorzugsweise in Gestalt einer Druckplatte vorgesehen ist.

Gemäß Realisierungen der erfindungsgemäßen Vorrichtung ist vorgesehen, dass dem zweiten Förderband eine Antriebseinrichtung zugeordnet ist, welche ausgebildet ist, das zweite Förderband kontinuierlich und mit einer vorzugsweise einstellbaren aber insbesondere konstanten Transportgeschwindigkeit in Transportrichtung des zweiten Förderbands anzutreiben, wobei dem ersten Förderband eine Antriebseinrichtung zugeordnet ist, welche ausgebildet ist, insbesondere bedarfsweise das erste Förderband mit einer vorzugsweise einstellbaren Transportgeschwindigkeit, welche insbesondere höher als die Transportgeschwindigkeit des zweiten Förderbands ist, in Transportrichtung des ersten Förderbands anzutreiben.

Wie auch bei dem erfindungsgemäßen Verfahren ist bei der erfindungsgemäßen Vorrichtung es grundsätzlich denkbar, dass eine Anzahl an in einer geschlossenen Kurve geführten Einteilstegen in Abhängigkeit von einer Anzahl an zu gruppierenden bzw. zu separierenden Produkten gewählt oder einstellbar ist, wobei je mehr Einteilstege vorzugsweise in einer äquidistanten Weise in der geschlossenen Kurve geführt werden, desto geringer die Anzahl der zu gruppierenden bzw. abzuseparierenden Produkte ist.

Alternativ oder zusätzlich hierzu ist es denkbar, dass die geschlossene Kurve, in welcher der mindestens eine Einteilsteg geführt ist, derart gewählt oder einstellbar ist, dass im Hinblick auf das zweite Förderband eine Rapportlänge insbesondere variabel und insbesondere stufenlos einstellbar ist. Dabei wird die Rapportlänge insbesondere vergrößert, wenn die geschlossene Kurve so gewählt oder eingestellt ist, dass eine Frequenz, mit welcher ein Einteilsteg zurück in den stromabwärtigen Bereich des zweiten Förderbands bewegt wird, verringert wird.

Zum Führen des mindestens einen Einteilstegs in einer geschlossenen Kurve kann die Einteilrichtung ein umlaufendes Mitnehmerband oder eine umlaufende Mitnehmerkette aufweisen, wobei das umlaufende Mitnehmerband bzw. die umlaufende Mitnehmerkette ausgebildet ist, den mindestens einen Einteilsteg in einer vorzugsweise einstellbaren Kurve zu führen, wobei zum Zurückbewegen des mindestens einen Einteilstegs zu dem stromaufwärtigen Bereich des zweiten Förderbands der mindestens eine Einteilsteg oberhalb, unterhalb oder seitlich einer Förderebene des zweiten Förderbands geführt und/oder transportiert wird.

Die Erfindung betrifft ferner ein System zum Separieren von Produkten für mehrreihige Gebinde, wobei das System eine erste Vorrichtung der zuvor genannten erfindungsgemäßen Art sowie mindestens eine weitere, zweite Vorrichtung der zuvor genannten erfindungsgemäßen Art aufweist. Das System weist ferner eine Einrichtung zum Zusammenführen der mit Hilfe der ersten Vorrichtung und der mindestens einen zweiten Vorrichtung abseparierten Produkte oder Produktgruppen auf.

Vorzugsweise weist die Einrichtung zum Zusammenführen zwei einander gegenüberliegend angeordnete seitliche Transportbänder auf, die derart ausgebildet und/oder angeordnet sind, dass die von der ersten Vorrichtung und der mindestens einen zweiten Vorrichtung abseparierten Produkte oder Produktgruppen - in Transportrichtung gesehen - konisch verjüngend zusammengeführt werden.

In diesem Zusammenhang ist es denkbar, dass die erste und mindestens eine zweite Vorrichtung derart gleichphasig betrieben werden, dass mit Hilfe der Einrichtung zum Zusammenführen der mit Hilfe der ersten und der mindestens einen zweiten Vorrichtung abseparierten Produkte oder Produktgruppen die abseparierten Produkte oder Produktgruppen als mehrreihige, insbesondere zweireihige Gebinde zusammengeführt werden.

Alternativ hierzu ist es aber auch denkbar, dass die erste und die mindestens eine zweite Vorrichtung derart gegenphasig betrieben werden, dass mit Hilfe der Einrichtung zum Zusammenführen der mit Hilfe der ersten und zweiten Vorrichtung abseparierten Produkte oder Produktgruppen die abseparierten Produkte oder Produktgruppen als einreihige Gebinde zusammengeführt werden.

Nachfolgend werden unter Bezugnahme auf die Zeichnungen exemplarische Ausführungsformen der Erfindung näher beschrieben.

Es zeigen:
- FIG. 1: schematisch und in einer Seitenansicht eine exemplarische Ausführungsform der erfindungsgemäßen Vorrichtung zum Gruppieren und/oder Separieren von im Reihentransport beförderten Produkten;
- FIG. 2: schematisch und in einer Draufsicht eine exemplarische Ausführungsform eines Systems zum Separieren von Produkten für einreihige Gebinde; und
- FIG. 3: schematisch und in einer Draufsicht ein System zum Separieren von Produkten für mehrreihige Gebinde.

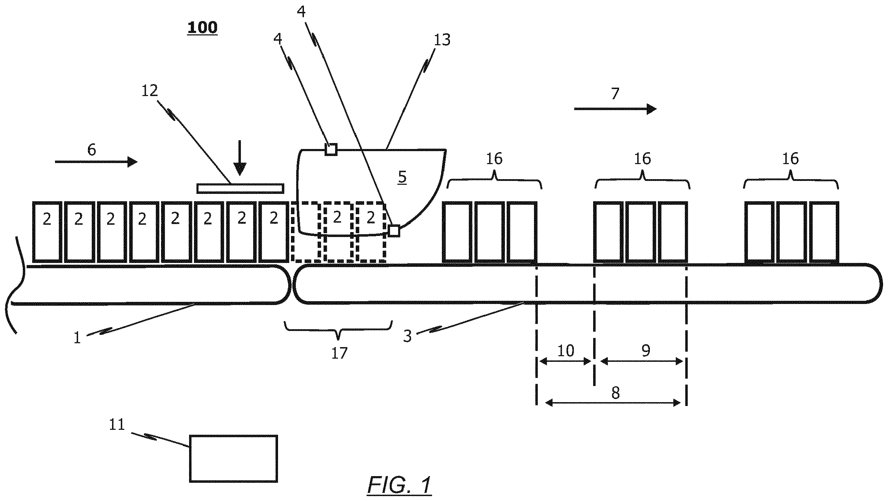

Die schematisch in FIG. 1 gezeigte Vorrichtung 100 zum Gruppieren und/oder Separieren von im Reihentransport beförderten Produkten 2 weist eine Horizontalfördereinrichtung auf, zu welcher ein stromaufwärtiges erstes Förderband 1 und ein in Reihe mit dem ersten Förderband 1 geschaltetes, stromabwärtiges zweites Förderband 3 gehört. Auf dem stromaufwärtigen ersten Förderband 1 werden die zu gruppierenden bzw. separierenden Produkte 2 hintereinander, d.h. im Reihentransport, befördert.

Um die Produkte 2 zu gruppieren, ist es notwendig, Produktgruppen 16 zu bilden, die voneinander separiert sind. Aufgabe hierbei ist es insbesondere, eine Rapportlänge 8 der gruppierten Produkte bzw. Produktgruppen 16 bzw. eine Länge 10 eines Abstands zwischen zwei benachbarten Produktgruppen 16 stufenlos einstellen zu können.

Wie in FIG. 1 angedeutet, ist unter der Rapportlänge 8 die Produktlänge 9, d.h. die Länge der Produktgruppe 16, addiert mit der Lückenlänge 10, d.h. der Länge eines Abstands zwischen zwei benachbarten Produktgruppen 16, zu verstehen.

Darüber hinaus soll der Prozess ab der Produktseparierung kontinuierlich laufen.

Zu diesem Zweck ist bei der erfindungsgemäßen Vorrichtung 100 vorgesehen, dass das zweite Förderband 3 kontinuierlich in eine von dem zweiten Förderband 3 vorgegebene Transportrichtung 7 angetrieben wird.

Ferner ist im Übergangsbereich 17 zwischen dem ersten Förderband 1 und dem zweiten Förderband 3 eine Einteileinrichtung 5 vorgesehen, die mindestens einen Einteilsteg 4 (in FIG. 1 weist die Einteileinrichtung 5 zwei Einteilstege 4 auf) aufweist.

Im Unterschied zu dem zweiten Förderband 3 wird das erste Förderband 1 in einem Start-Stopp-Betrieb betrieben.

Im Einzelnen ist bei der erfindungsgemäßen Vorrichtung 100 vorgesehen, dass mit Hilfe des ersten Förderbands 1 die zu gruppierenden bzw. zu separierenden Produkte 2 so lange auf das in Reihe mit dem ersten Förderband 1 geschaltetes zweites Förderband 3 befördert werden, bis ein stromabwärtiges Produkt der zu gruppierenden bzw. zu separierenden Produkte 2 an einen Einteilsteg 4 der dem zweiten Förderband 3 zugeordneten Einteileinrichtung 5 anläuft. Nach oder beim Anlaufen des stromabwärtigen Produkts an den Einteilsteg 4 wird eine mit Hilfe des ersten Förderbands 1 bewirkte Beförderung von Produkten 2 in den stromaufwärtigen Bereich des zweiten Förderbands 3 unterbrochen.

Wie bereits angedeutet, wird das zweite Förderband 3 kontinuierlich in die von dem zweiten Förderband 3 vorgegebene Transportrichtung 7 angetrieben, wobei die von dem zweiten Förderband 3 vorgegebene Transportrichtung 7 auch der von dem ersten Förderband 1 vorgegebenen Transportrichtung 6 entsprechen kann. Dabei ist vorgesehen, dass der Einteilsteg 4 der Einteileinrichtung 5 vorzugsweise über eine definierte Strecke mit dem zweiten Förderband 3 in dessen Transportrichtung 7 mitläuft und dann aus dem Produktstrom des zweiten Förderbands 3 herausgenommen wird.

Nach dem Herausnehmen des Einteilstegs 4 aus dem Produktstrom des zweiten Förderbands 3 wird dieser entgegen der Transportrichtung 7 des zweiten Förderbands 3 wieder zurück in einen stromaufwärtigen Bereich des zweiten Förderbands 3 bewegt, in welchem die von dem ersten Förderband 1 beförderten Produkte 2 an den zurückbewegten Einteilsteg 4 anlaufbar sind.

Nach dem Zurückbewegen des Einteilstegs 4 in den stromaufwärtigen Bereich des zweiten Förderbands 3 wird eine mit Hilfe des ersten Förderbands 1 bewirkte Beförderung von Produkten 2 in den stromaufwärtigen Bereich des zweiten Förderbands 3 wieder aufgenommen, so dass mit Hilfe des ersten Förderbands 1 die zu gruppierenden bzw. zu separierenden Produkte 2 wieder auf das zweite Förderband 3 befördert werden.

Dies geschieht insbesondere so lange, bis ein stromabwärtiges Produkt der zu gruppierenden bzw. zu separierenden Produkte 2 an den in den stromaufwärtigen Bereich des zweiten Förderbands 3 zurückbewegten Einteilsteg 4 anläuft.

Nach oder beim Anlaufen des stromabwärtigen Produkts an den Einteilsteg 4 wird erneut eine mit Hilfe des ersten Förderbands 1 bewirkte Beförderung von Produkten 2 in den stromaufwärtigen Bereich des zweiten Förderbands 3 unterbrochen.

Insbesondere ist bei der in den Zeichnungen gezeigten exemplarischen Ausführungsform der erfindungsgemäßen Vorrichtung 100 vorgesehen, dass die Einteileinrichtung 5 ausgebildet ist, den mindestens einen Einteilsteg 4 derart in einer geschlossenen Kurve zu führen, dass der Einteilsteg 4 über eine definierte Strecke mit dem zweiten Förderband 3 in dessen Transportrichtung 7 mitläuft und dann aus dem Produktstrom des zweiten Förderbands 3 herausgenommen und entgegen der Transportrichtung 7 des zweiten Förderbands 3 wieder zurück in den stromaufwärtigen Bereich des zweiten Förderbands 3 bewegt wird.

Der Einteileinrichtung 5 ist eine Steuereinrichtung 11 zugeordnet, welche ausgebildet ist, eine mit Hilfe des ersten Förderbands 1 bewirkte Beförderung von Produkten 2 in den stromaufwärtigen Bereich des zweiten Förderbands 3 zu unterbrechen, wenn ein stromabwärtiges Produkt der zu gruppierenden bzw. zu separierenden Produkte 2 in den stromaufwärtigen Bereich des zweiten Förderbands 3 an den Einteilsteg 4 anläuft.

Zum Unterbrechen einer mit Hilfe des ersten Förderbands 1 bewirkten Beförderung von Produkten 2 in den stromaufwärtigen Bereich des zweiten Förderbands 3 kann die Steuereinrichtung 11 ausgebildet sein, eine dem ersten Förderband 1 zugeordnete Antriebseinrichtung (in FIG. 1 nicht gezeigt) anzuhalten.

Alternativ oder zusätzlich hierzu kann zum Unterbrechen einer mit Hilfe des ersten Förderbands 1 bewirkten Beförderung von Produkten 2 in den stromaufwärtigen Bereich des zweiten Förderbands 3 eine vorzugsweise am stromabwärtigen Endbereich des ersten Förderbands 1 angeordnete und bedarfsweise ansteuerbare Rückhalteeinrichtung 12 vorgesehen sein.

Wie in FIG. 1 schematisch angedeutet, kann diese Rückhalteeinrichtung 12 insbesondere ein Druckelement vorzugsweise in Gestalt einer Druckplatte aufweisen, mit welcher die auf dem ersten Förderband 1 beförderten Produkte 2 von einem Übertritt auf das zweite Förderband 3 unterbrochen werden.

Vorzugsweise ist dem zweiten Förderband 3 ebenfalls eine (in FIG. 1 nicht gezeigte) Antriebseinrichtung zugeordnet, welche ausgebildet ist, das zweite Förderband 3 kontinuierlich und mit einer vorzugsweise einstellbaren aber insbesondere konstanten Transportgeschwindigkeit in Transportrichtung 7 des zweiten Förderbands 3 anzutreiben.

Wie bereits angedeutet, ist dem ersten Förderband 1 ebenfalls eine (in FIG. 1 nicht gezeigte) Antriebseinrichtung zugeordnet, welche ausgebildet ist, insbesondere bedarfsweise das erste Förderband 1 mit einer vorzugsweise einstellbaren Transportgeschwindigkeit in Transportrichtung 6 des ersten Förderbands 1 anzutreiben, wobei diese Transportgeschwindigkeit insbesondere höher als die Transportgeschwindigkeit des zweiten Förderbands 3 ist.

Wie bereits ausgeführt, weist die Einteileinrichtung 5 mindestens einen Einteilsteg 4 auf. Im Einzelnen sind bei der in FIG. 1 schematisch gezeigten Ausführungsform der erfindungsgemäßen Vorrichtung 100 insgesamt zwei Einteilstege 4 vorgesehen, die in einer geschlossenen Kurve geführt werden.

Allgemein ausgedrückt ist eine Anzahl an in einer geschlossenen Kurve geführten Einteilstege 4 in Abhängigkeit von einer Anzahl an zu gruppierenden bzw. zu separierenden Produkte 2 gewählt oder einstellbar. Hierbei gilt, dass je mehr Einteilstege 4 vorzugsweise in einer äquidistanten Weise in der geschlossenen Kurve geführt werden, desto geringer die Anzahl der zu gruppierenden bzw. abzuseparierenden Produkte 2 ist.

Die geschlossene Kurve, in welcher der mindestens eine Einteilsteg 4 geführt ist, ist derart gewählt oder einstellbar, dass im Hinblick auf das zweite Förderband 3 eine Rapportlänge 8 insbesondere variabel und insbesondere stufenlos einstellbar ist. Dabei wird die Rapportlänge 8 insbesondere vergrößert, wenn die geschlossene Kurve so gewählt oder eingestellt ist, dass eine Frequenz, mit welcher ein Einteilsteg 4 zurück in den stromabwärtigen Bereich des zweiten Förderbands 3 bewegt wird, verringert wird.

Zum Führen des mindestens einen Einteilstegs 4 in einer geschlossenen Kurve weist die Einteileinrichtung 5 ein umlaufendes Mitnehmerband 13 oder eine umlaufende Mitnehmerkette auf, wobei das umlaufende Mitnehmerband 13 bzw. die umlaufende Mitnehmerkette ausgebildet ist, den mindestens einen Einteilsteg 4 in einer vorzugsweise einstellbaren Kurve zu führen.

Beim Zurückbewegen des mindestens einen Einteilstegs 4 zu dem stromabwärtigen Bereich des zweiten Förderbands 3 wird der mindestens eine Einteilsteg 4 oberhalb (wie in FIG. 1 angedeutet) einer Förderebene des zweiten Förderbands 3 geführt und/oder transportiert.

Alternativ hierzu ist es aber auch denkbar, dass zum Zurückbewegen des mindestens einen Einteilstegs 4 zu dem stromaufwärtigen Bereich des zweiten Förderbands 3 der mindestens eine Einteilsteg 4 unterhalb oder seitlich einer Förderebene des zweiten Förderbands 3 geführt und/oder transportiert wird.

Wie in FIG. 1 angedeutet, läuft der Einteilsteg 4 vorzugsweise über eine definierte Strecke mit dem zweiten Förderband 3 in dessen Transportrichtung 7 mit, bevor dieser aus dem Produktstrom des zweiten Förderbands 3 herausgenommen wird. Vorzugsweise ist eine Geschwindigkeit, mit welcher der Einteilsteg 4 über die definierte Strecke mit dem zweiten Förderband 3 in dessen Transportrichtung 7 mitläuft, einstellbar und insbesondere mit der Transportgeschwindigkeit des zweiten Transportbands 3 derart koordiniert, dass die Geschwindigkeit des Einteilstegs 4 beim Mitlaufen mit dem zweiten Förderband 3 in dessen Transportrichtung 7 zumindest im Wesentlichen der Transportgeschwindigkeit des zweiten Transportbands 3 entspricht.

Gemäß Ausführungsformen der vorliegenden Erfindung ist in diesem Zusammenhang insbesondere vorgesehen, dass eine Geschwindigkeit, mit welcher der Einteilsteg 4 über die definierte Strecke mit dem zweiten Förderband 3 in dessen Transportrichtung 7 mitläuft, vorzugsweise einstellbar und insbesondere mit der Transportgeschwindigkeit des zweiten Transportbands 3 derart koordiniert ist, dass die Geschwindigkeit des Einteilstegs 4 bei und/oder unmittelbar vor seiner Herausnahme aus dem Produktstrom des zweiten Förderbands 3 größer als die Transportgeschwindigkeit des zweiten Förderbands 3 ist.

Mit anderen Worten, bevor der Einteilsteg 4 aus dem Produktstrom des zweiten Förderbands 3 herausgenommen wird, eilt dieser etwas der Produktgruppe 16 in Transportrichtung 7 des zweiten Förderbands 3 vor und liegt insbesondere nicht mehr an dem stromabwärtigen Produkt der Produktgruppe 16 an, so dass das Herausnehmen des Einteilstegs 4 aus dem Produktstrom des zweiten Förderbands 3 erfolgen kann, ohne dass die Gefahr besteht, dass mit dem Herausnehmen des Einteilstegs 4 das stromabwärtige Produkt der Produktgruppe 16 zumindest teilweise mit dem Einteilsteg 4 mitgenommen wird.

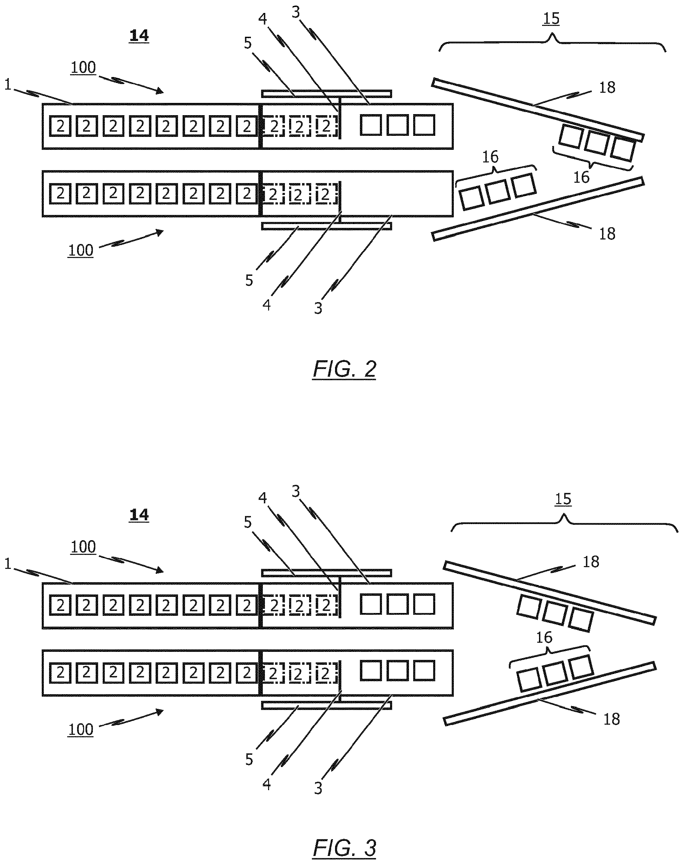

Nachfolgend werden unter Bezugnahme auf die Darstellungen in FIG. 2 und in FIG. 3 entsprechende Systeme 14 zum Separieren von Produkten 2 für ein- bzw. mehrreihige Gebinde beschrieben.

Im Einzelnen zeigt FIG. 2 schematisch und in einer Draufsicht ein System 14 zum Separieren von Produkten 2 für einreihige Gebinde. Kurz zusammengefasst weist dieses System 14 zwei parallel geschaltete Vorrichtungen 100 gemäß FIG. 1 auf, wobei im stromabwärtigen Bereich der jeweiligen zweiten Förderbänder 3 eine Einrichtung 15 zum Zusammenführen der mit Hilfe der beiden Vorrichtungen 100 abseparierten Produkte bzw. Produktgruppen 16 angeordnet ist.

Hierbei kann die Einrichtung 15 zum Zusammenführen zwei einander gegenüberliegend angeordnete seitliche Transportbänder 18 aufweisen, die derart ausgebildet und/oder angeordnet sind, dass die von den beiden Vorrichtungen 100 abseparierten Produkte oder Produktgruppen 16 - in Transportrichtung 7 gesehen - konisch zusammengeführt werden.

Bei dem in FIG. 2 schematisch gezeigten System 14 sind die beiden Vorrichtungen 100 zum Gruppieren und/oder Separieren von im Reihentransport beförderten Produkte 2 derart gegenphasig betrieben, dass mit Hilfe der Einrichtung 15 zum Zusammenführen der mit Hilfe der beiden Vorrichtungen 100 abseparierten Produkte oder Produktgruppen 16 die abseparierten Produkte oder Produktgruppen 16 als einreihige Gebinde zusammengeführt werden.

Hingegen ist bei dem schematisch in FIG. 3 gezeigten System 14 vorgesehen, dass die beiden Vorrichtungen 100 zum Gruppieren und/oder Separieren von im Reihentransport beförderten Produkte derart gleichphasig betrieben werden, dass mit Hilfe der Einrichtung 15 zum Zusammenführen der mit Hilfe der beiden Vorrichtungen 100 abseparierten Produkte oder Produktgruppen 16 die abseparierten Produkte oder Produktgruppen 16 als mehrreihige, insbesondere zweireihige Gebinde zusammengeführt werden.

Kurz zusammengefasst handelt es sich bei der erfindungsgemäßen Vorrichtung 100 um eine Vorrichtung zur Produktseparierung mit stufenlos einstellbarer Rapportlänge. Die erstellten Gebindegruppen 16 können anschließend mit einer stufenlos verstellbaren Lücke zueinander beispielsweise einer Folienschlauchbeutelmaschine zugeführt werden. Ab der Produktseparierung läuft dabei der Prozess kontinuierlich.

Das in FIG. 1 schematisch gezeigte Grundprinzip der Funktionsweise der erfindungsgemäßen Vorrichtung 100 sieht vor, dass das erste Förderband 1, welches insbesondere als Bodenband ausgebildet ist, im Start-Stopp-Betrieb betrieben wird und die Produkte 2 an einen vorlaufenden Einteilsteg 4 anlaufen lässt.

Ab der gewünschten Produktanzahl stoppt das erste Förderband 1. Unterstützt von der Rückhalteeinrichtung 12 mit der Druckplatte von oben werden die nachlaufenden Produkte 2 zurückgehalten.

Der vorlaufende Einteilsteg 4 fährt nach oben in seiner Hüllkurve aus dem Produktstrom des zweiten Transportförderbands 3 heraus. Hierbei darf der Einteilsteg 4 das stromaufwärtige Produkt der vorlaufenden Produktgruppe 16 nicht berühren.

Gleichzeitig muss der Einteilsteg 4 seine Start-Stellung im stromaufwärtigen Bereich des zweiten Förderbands 3 früh genug erreichen und gleichzeitig nicht auf das letzte (stromaufwärtige) Produkt der Produktgruppe 16 aufschlagen.

Die Hüllkurve mit dem mindestens einen Einteilsteg 4 muss so gewählt sein, dass mit einem aufgeschalteten Bewegungsprofil die Lückenlänge 10 zwischen den Produktgruppen 16 auf dem zweiten Förderband 3 eingestellt werden kann.

Beispielsweise ist es in diesem Zusammenhang denkbar, dass die Anzahl der Einteilstege 4, die auf der Hüllkurve bewegt werden, variiert wird.

Die Erfindung ist nicht auf die in den Zeichnungen gezeigten Ausführungsformen beschränkt, sondern ergibt sich aus einer Zusammenschau sämtlicher hierin offenbarter Merkmale.

### Bezugszeichenliste

- 1: erstes Förderband
- 2: Produkte
- 3: zweites Förderband
- 4: Einteilsteg
- 5: Einteileinrichtung
- 6: Transportrichtung des ersten Förderbands
- 7: Transportrichtung des zweiten Förderbands
- 8: Rapportlänge
- 9: Produktlänge
- 10: Lückenlänge
- 11: Steuereinrichtung
- 12: Rückhalteeinrichtung
- 13: umlaufendes Endlosband
- 14: System um Separieren von Produkten
- 15: Einrichtung zum Zusammenführen von abseparierten Produkten oder Produktgruppen
- 16: abseparierte Produkte oder Produktgruppen
- 17: Übergangsbereich
- 18: insbesondere seitliche Transportbänder der Einrichtung zum Zusammenführen von abseparierten Produkten oder Produktgruppen

- 100: Vorrichtung zum Gruppieren und/oder Separieren

## Patentansprüche

1. Verfahren zum Gruppieren und/oder Separieren von im Reihentransport beförderten Produkten (2), wobei das Verfahren die folgenden Verfahrensschritte aufweist:
- mit Hilfe eines ersten Förderbands (1) werden die zu gruppierenden bzw. zu separierenden Produkte (2) so lange auf ein in Reihe mit dem ersten Förderband (1) geschaltetes zweites Förderband (3) befördert, bis ein stromabwärtiges Produkt der zu gruppierenden bzw. zu separierenden Produkte (2) an einen Einteilsteg (4) einer dem zweiten Förderband (3) zugeordneten Einteileinrichtung (5) anläuft; und
- nach oder beim Anlaufen des stromabwärtigen Produkts an den Einteilsteg (4) wird eine mit Hilfe des ersten Förderbands (1) bewirkte Beförderung von Produkten (2) in den stromaufwärtigen Bereich des zweiten Förderbands (3) unterbrochen,
wobei das zweite Förderband (3) kontinuierlich in eine von dem zweiten Förderband (3) vorgegebene Transportrichtung (7) angetrieben wird, und wobei der Einteilsteg (4) vorzugsweise über eine definierte Strecke mit dem zweiten Förderband (3) in dessen Transportrichtung (7) mitläuft und vorzugsweise dann aus dem Produktstrom des zweiten Förderbands (3) herausgenommen wird.

2. Verfahren nach Anspruch 1,
wobei nach dem Herausnehmen des Einteilstegs (4) aus dem Produktstrom des zweiten Förderbands (3) dieser entgegen der Transportrichtung (7) des zweiten Förderbands (3) wieder zurück in einen stromaufwärtigen Bereich des zweiten Förderbands (3) bewegt wird, in welchem die von dem ersten Förderband (1) beförderten Produkte (2) an den zurückbewegten Einteilsteg (4) anlaufbar sind.

3. Verfahren nach Anspruch 2,
wobei nach dem Zurückbewegen des Einteilstegs (4) in den stromaufwärtigen Bereich des zweiten Förderbands (3) eine mit Hilfe des ersten Förderbands (1) bewirkte Beförderung von Produkten (2) in den stromaufwärtigen Bereich des zweiten Förderbands (3) wieder aufgenommen wird, so dass mit Hilfe des ersten Förderbands (1) die zu gruppierenden bzw. zu separierenden Produkte (2) wieder auf das zweite Förderband (3) befördert werden, und zwar so lange, bis ein stromabwärtiges Produkt der zu gruppierenden bzw. zu separierenden Produkte (2) an den in den stromaufwärtigen Bereich des zweiten Förderbands (3) zurückbewegten Einteilsteg (4) anläuft.

4. Verfahren nach einem der Ansprüche 1 bis 3,
wobei die dem zweiten Förderband (3) zugeordnete Einteileinrichtung (5) ausgebildet ist, den Einteilsteg (4) gemäß einem insbesondere vorab festgelegten oder festlegbaren Zeit- und/oder Ereignisablauf nach dessen Herausnahme aus dem Produktstrom des zweiten Förderbands (3) wieder in einen stromaufwärtigen Bereich des zweiten Förderbands (3), in welchem die von dem ersten Förderband (1) beförderten Produkte (2) anlaufbar sind, derart zurückzubewegen, dass im Hinblick auf das zweite Förderband (3) eine Rapportlänge (8) und/oder eine Lückenlänge (10) zwischen zwei benachbarten abseparierten Produkten oder Produktgruppen (16) auf dem zweiten Förderband (3) insbesondere variabel und insbesondere stufenlos einstellbar ist.

5. Verfahren nach einem der Ansprüche 1 bis 4,
wobei die dem zweiten Förderband (3) zugeordnete Einteileinrichtung (5) zum Transport des Einteilstegs (4) mindestens ein umlaufendes Endlosband (13) aufweist, welches ausgebildet ist, den Einteilsteg (4) in einer geschlossenen Kurve zu führen und/oder zu transportieren, wobei beim Zurückbewegen des Einteilstegs (4) zu dem stromaufwärtigen Bereich des zweiten Förderbands (3) der Einteilsteg (4) oberhalb, unterhalb oder seitlich einer Förderebene des zweiten Förderbands (3) geführt und/oder transportiert wird.

6. Verfahren nach einem der Ansprüche 1 bis 5,
wobei eine Geschwindigkeit, mit welcher der Einteilsteg (4) über die definierte Strecke mit dem zweiten Förderband (3) in dessen Transportrichtung (7) mitläuft, vorzugsweise einstellbar und insbesondere mit der Transportgeschwindigkeit des zweiten Transportbands (3) derart koordiniert ist, dass die Geschwindigkeit des Einteilstegs (4) beim Mitlaufen mit dem zweiten Förderband (3) in dessen Transportrichtung (7) zumindest im Wesentlichen der Transportgeschwindigkeit des zweiten Transportbands (3) entspricht.

7. Verfahren nach einem der Ansprüche 1 bis 6,
wobei eine Geschwindigkeit, mit welcher der Einteilsteg (4) über die definierte Strecke mit dem zweiten Förderband (3) in dessen Transportrichtung (7) mitläuft, vorzugsweise einstellbar und insbesondere mit der Transportgeschwindigkeit des zweiten Transportbands (3) derart koordiniert ist, dass die Geschwindigkeit des Einteilstegs (4) bei und/oder unmittelbar vor seiner Herausnahme aus dem Produktstrom des zweiten Förderbands (3) größer als die Transportgeschwindigkeit des zweiten Förderbands (3) ist.

8. Verfahren nach einem der Ansprüche 1 bis 7,
wobei die dem zweiten Förderband (3) zugeordnete Einteileinrichtung (5) mindestens zwei von dem umlaufenden Endlosband (13) geführte und/oder transportierte Einteilstege (4) aufweist.

9. Vorrichtung (100) zum Gruppieren und/oder Separieren von im Reihentransport beförderten Produkten (2), wobei die Vorrichtung (100) Folgendes aufweist:
- eine Horizontalfördereinrichtung mit einem stromaufwärtigen ersten Förderband (1) und einem in Reihe mit dem ersten Förderband (1) geschalteten, stromabwärtigen zweiten Förderband (3);
- eine dem zweiten Förderband (3) zugeordnete Einteileinrichtung (5) mit mindestens einem Einteilsteg (4); und
- eine Steuereinrichtung (11), welche ausgebildet ist, das erste Förderband (1) insbesondere in einem Start-Stopp-Betrieb zu betreiben,
wobei die Einteileinrichtung (5) ausgebildet ist, den mindestens einen Einteilsteg (4) derart vorzugsweise in einer geschlossenen Kurve zu führen, dass der mindestens eine Einteilsteg (4) über eine definierte Strecke mit dem zweiten Förderband (3) in dessen Transportrichtung (7) mitläuft und dann aus dem Produktstrom des zweiten Förderbands (3) herausgenommen und entgegen der Transportrichtung (7) des zweiten Förderbands (3) wieder zurück in einen stromaufwärtigen Bereich des zweiten Förderbands (3) bewegt wird,
wobei das erste Förderband (1) ausgebildet ist, die zu gruppierenden bzw. zu separierenden Produkte (2) in den stromaufwärtigen Bereich des zweiten Förderbands (3) zu befördern, und
wobei die Steuereinrichtung (11) ausgebildet ist, eine mit Hilfe des ersten Förderbands (1) bewirkte Beförderung von Produkten (2) in den stromaufwärtigen Bereich des zweiten Förderbands (3) zu unterbrechen, wenn ein stromabwärtiges Produkt der zu gruppierenden bzw. zu separierenden Produkte (2) in dem stromaufwärtigen Bereich des zweiten Förderbands (3) an den mindestens einen Einteilsteg (4) anläuft.

10. Vorrichtung (100) nach Anspruch 9,
wobei zum Unterbrechen einer mit Hilfe des ersten Förderbands (1) bewirkten Beförderung von Produkten (2) in den stromaufwärtigen Bereich des zweiten Förderbands (3) die Steuereinrichtung (11) ausgebildet ist, eine dem ersten Förderband (1) zugeordnete Antriebseinrichtung anzuhalten; und/oder
wobei zum Unterbrechen einer mit Hilfe des ersten Förderbands (1) bewirkten Beförderung von Produkten (2) in den stromaufwärtigen Bereich des zweiten Förderbands (3) vorzugsweise am stromabwärtigen Endbereich des ersten Förderbands (1) eine bedarfsweise ansteuerbare Rückhalteeinrichtung (12) insbesondere mit einem Druckelement vorzugsweise in Gestalt einer Druckplatte vorgesehen ist.

11. Vorrichtung (100) nach Anspruch 9 oder 10,
wobei dem zweiten Förderband (3) eine Antriebseinrichtung zugeordnet ist, welche ausgebildet ist, das zweite Förderband (3) kontinuierlich und mit einer vorzugsweise einstellbaren aber insbesondere kontanten Transportgeschwindigkeit in Transportrichtung (7) des zweiten Förderbands (3) anzutreiben, wobei dem ersten Förderband (1) eine Antriebseinrichtung zugeordnet ist, welche ausgebildet ist, insbesondere bedarfsweise das erste Förderband (1) mit einer vorzugsweise einstellbaren Transportgeschwindigkeit, welche insbesondere höher als die Transportgeschwindigkeit des zweiten Förderbands (3) ist, in Transportrichtung (7) des ersten Förderbands (1) anzutreiben.

12. Vorrichtung (100) nach einem der Ansprüche 9 bis 11,
wobei eine Anzahl an in einer geschlossenen Kurve geführten Einteilstege (4) in Abhängigkeit von einer Anzahl an zu gruppierenden bzw. zu separierenden Produkten (2) gewählt oder einstellbar ist, wobei je mehr Einteilstege (4) vorzugsweise in einer äquidistanten Weise in der geschlossenen Kurve geführt werden, desto geringer die Anzahl der zu gruppierenden bzw. abzuseparierenden Produkte (2) ist; und/oder wobei die geschlossene Kurve, in welcher der mindestens eine Einteilsteg (4) geführt ist, derart gewählt oder einstellbar ist, dass im Hinblick auf das zweite Förderband (3) eine Rapportlänge (8) insbesondere variabel und insbesondere stufenlos einstellbar ist, wobei die Rapportlänge (8) insbesondere vergrößert wird, wenn die geschlossene Kurve so gewählt oder eingestellt ist, dass eine Frequenz, mit welcher ein Einteilsteg (4) zurück in den stromabwärtigen Bereich des zweiten Förderbands (3) bewegt wird, verringert wird.

13. Vorrichtung (100) nach einem der Ansprüche 9 bis 12,
wobei zum Führen des mindestens einen Einteilstegs (4) in einer geschlossenen Kurve die Einteileinrichtung (5) ein umlaufendes Mitnehmerband (13) oder eine umlaufende Mitnehmerkette aufweist, wobei das umlaufende Mitnehmerband (13) bzw. die umlaufende Mitnehmerkette ausgebildet ist, den mindestens einen Einteilsteg (4) in einer vorzugsweise einstellbaren Kurve zu führen, wobei beim Zurückbewegen des mindestens einen Einteilstegs (4) zu dem stromaufwärtigen Bereich des zweiten Förderbands (3) der mindestens eine Einteilsteg (4) oberhalb, unterhalb oder seitlich einer Förderebene des zweiten Förderbands (3) geführt und/oder transportiert wird.

14. System (14) zum Separieren von Produkten (2) für ein- oder mehrreihige Gebinde oder Produktgruppen (16), wobei das System (14) Folgendes aufweist:
- eine erste Vorrichtung (100) nach einem der Ansprüche 9 bis 13;
- mindestens eine weitere, zweite Vorrichtung (100) nach einem der Ansprüche 9 bis 13; und
- eine Einrichtung (15) zum Zusammenführen der mit Hilfe der ersten Vorrichtung (100) und der zweiten Vorrichtung (100) abseparierten Produkte oder Produktgruppen (16),
wobei die Einrichtung (15) zum Zusammenführen vorzugsweise zwei einander gegenüberliegend angeordnete seitliche Transportbänder (18) aufweist, die derart ausgebildet und/oder angeordnet sind, dass die von der ersten Vorrichtung (100) und der zweiten Vorrichtung (100) abseparierten Produkte oder Produktgruppen (16) - in Transportrichtung (7) gesehen - konisch zusammengeführt werden.

15. System (14) nach Anspruch 14,
wobei die erste und zweite Vorrichtung (100) derart angeordnet und insbesondere gleichphasig betrieben werden, dass mit Hilfe der Einrichtung (15) zum Zusammenführen der mit Hilfe der ersten und zweiten Vorrichtung (100) abseparierten Produkte oder Produktgruppen (16) die abseparierten Produkte oder Produktgruppen (16) als mehrreihige, insbesondere zweireihige Gebinde zusammengeführt werden; oder wobei die erste und zweite Vorrichtung (100) derart angeordnet und insbesondere gegenphasig betrieben werden, dass mit Hilfe der Einrichtung (15) zum Zusammenführen der mit Hilfe der ersten und zweiten Vorrichtung (100) abseparierten Produkte oder Produktgruppen (16) die abseparierten Produkte oder Produktgruppen (16) als einreihige Gebinde zusammengeführt werden.
